# EUROPEAN PATENT APPLICATION

(11) **EP 0 817 293 A1**
(43) Date of publication of application: **07.01.1998**
(21) Application number: 96900185.8
(22) Date of filing: 08.01.1996
(51) Int. Cl.: H01M 4/58

(54) **SECONDARY BATTERY**

(71) Applicant: TORAY INDUSTRIES, INC., Tokyo 103 (JP)
(72) Inventor: SUZUKI, Tatsuhiko, Shiga-ken 520 (JP); SHIMOYAMA, Naoki, Shiga-ken 520 (JP); SAKUMA, Isamu, Shiga-ken 520 (JP)
(74) Representative: Coleiro, Raymond
(86) International application number: JP9600012
(87) International publication number: WO9725751

(57) **Abstract**

In the present invention, by producing a secondary battery using an electrode containing carbon fibre of average length less than 100 µm and an electroconductive agent, it is possible to offer a secondary battery of high charge and discharge capacity.

## Description

### Technical Field

The present invention relates to a secondary battery employing a positive electrode, negative electrode and non-aqueous electrolyte solution.

### Background Art

In recent years, along with the spread of portable equipment such as video cameras and notebook-type personal computers, demand has increased for small, high-capacity, secondary batteries. Most of the secondary batteries currently used are nickel-cadmium batteries employing an alkali electrolyte solution, but the battery voltage is low, at around 1.2 V, and raising the energy density is difficult. Hence, in order to raise the voltage, secondary batteries employing lithium metal as the negative electrode have been investigated.

However, with secondary batteries which employ lithium metal as the negative electrode, dendritic growth of the lithium occurs as a result of the repeating charging/discharging, and problems such as short-circuits occurring or the battery life being reduced tend to arise. Hence, secondary batteries have been proposed which employ various types of carbon material for the negative electrode and which utilize the doping and undoping of the carbon material with lithium ions. As secondary batteries comprising a negative electrode employing such doping and undoping of a carbon material with lithium ions, there are known those disclosed in Japanese Unexamined Patent Publication (Kokai) Nos 57-208079, 58-93176, 58-192266, 62-90863, 62-122066 and 3-66856, etc.

However, the charge/discharge capacity has been inadequate in the prior art.

### Ideal Mode for Practising the Invention

In order to resolve the aforesaid problem, the present invention has the following constitution.

"A secondary battery characterized in that there is employed an electrode containing carbon fibre of average length less than 100 µm and an electroconductive agent."

The secondary battery of the present invention relates to a secondary battery employing a negative electrode, positive electrode and a non-aqueous electrolyte solution, and there are no particular restrictions on the structure of the secondary battery or on the method of production thereof.

In the secondary battery of the present invention, it is preferred that carbon fibre be used in that there is excellent doping and undoping with the lithium ions. There are no particular restrictions on the carbon fibre raw material or on the production method employed, etc. As examples of the raw material, there are coke and pitch from coal or petroleum, etc, wood or other such vegetative material, low molecular weight organic materials such as natural gas or regular hydrocarbons, etc, and synthetic polymers such as polyacrylonitrile, phenolic resins or furfuryl alcohol resins, etc, and the carbon material is obtained following a carbonization or graphitization treatment in which firing is carried out in the range 700 to 3000°C according to the particular raw material and application. As properties of the carbon fibre, there can be cited the density, crystal thickness (Lc), crystal lattice planar spacing (d002), electrical resistance, strength and elastic modulus, etc. These should be appropriately selected in accordance with the electrode characteristics of the target secondary battery. For example, Lc is preferably no more than 20 µ, and again d002 is preferably about 0.335 to 0.370 nm.

In the present invention, when compared to the case where the carbon fibre is employed as long fibre, the voids within the electrode are increased so this is ideal for obtaining a secondary battery with a large charge/discharge capacity, which is the objective of the invention. Furthermore, since a powder-form carbon fibre is employed, it becomes possible to construct the electrode easily by adding solvent along with a binder and the electroconductive agent to produce a slurry, and then performing coating with said slurry. The powder-form carbon fibre needs to have an average length of less than 100 µm, in particular no more than 80 µm and more preferably no more than 50 µm. If the average length is 100 µm or more then it is difficult to prepare a uniform slurry at the time of the slurrying and coating, so that not only is there the problem that it is hard to obtain a uniform coated film, but also, even where film coating has been possible, there is the problem that the electrode capacity is lowered. This is thought to be because, if the average length is 100 µm or more, packing is difficult so that the density is reduced and the contact resistance between active materials is increased.

As a secondary battery which uses powder-form carbon fibre, there is that disclosed in Japanese Unexamined Patent Publication No. 5-174820. In said Japanese Unexamined Patent Publication No. 5-174820 it states that it is possible to use, in fibre form, carbon produced by the firing of acrylonitrile polymer, but from 100 µm to 1 mm is said to be the preferred range in terms of length, and so here too it differs from the present invention.

The "average length" herein can be determined for example by measuring the length in the fibre axis direction of at least 20 of the powder-form carbon materials by observation using SEM or the like. Further, there are no particular restrictions on the "cutting" method, and methods such as slicing and grinding, etc, can be used.

Moreover, if the average length of the carbon fibre is greater than the electrode coating thickness, then short-circuiting tends to occur when facing the positive electrode with a separator interposed, so, taking the electrode coating thickness as A and the average length of the carbon material as B, the average length of said carbon fibre is preferably B ≤ A, more preferably 1.5B ≤ A and, still more preferably, 2B ≤ A. Examples of the carbon fibre are PAN-based carbon fibre obtained from polyacrylonitrile (PAN), pitch-based carbon fibre obtained for coal or petroleum pitch, etc, cellulose-based carbon fibre obtained from cellulose, and gas phase grown carbon fibre obtained from a low molecular weight organic material gas, and as well as these there may also be employed carbon fibre obtained by firing polyvinyl alcohol, lignin, polyvinyl chloride, polyimide, phenolic resin or furfuryl alcohol, etc. According to the particular characteristics of the battery used, carbon fibre which satisfies such characteristics will be suitably selected from amongst these carbon fibres, but PAN-based carbon fibre, pitch-based carbon fibre and gas phase grown carbon fibre are preferred. PAN-based carbon fibre and pitch-based carbon fibre are particularly preferred in that doping and undoping with lithium ions is excellent. Of these, the Toray (Co.) produced 'Torayca' T-series or M-series of PAN-based carbon fibre or pitch-based carbon fibre obtained by the firing of meso-phase pitch coke are still further preferred.

The fibre diameter of the carbon fibre employed in the present invention is not restricted but from 2 to 50 µm and preferably from 3 to 20 µm fibre is used. If the fibre diameter exceeds 50 µm, then the active material itself becomes too large and the electrode becomes thick. Again, if the fibre diameter is less than 2 µm, then problems arise like the handling being difficult because the active material itself becomes too small or the carbon fibre productivity being reduced because of the tendency for yarn breakage to occur.

In the electrode employed in the present invention, a binding agent is preferably added to the active material in order to enhance the mouldability. This binding agent is not particularly restricted, other than that it is polymer compound such as polytetrafluoroethylene, polyvinylidene fluoride, polyacrylonitrile, polyimide, polyethylene, polypropylene, epoxy resin, phenolic resin or the like. Such binding agents are not particularly restricted in terms of their form of usage and, as well as being employed as a powder mixed with the active material, they can also be dissolved in a solvent or dispersed as an emulsion and used to form a slurry with the active material, etc.

In the electrode employed in the present invention, a current collector is used to effect electrical connection from the electrode to the terminal. Metals such as copper, stainless steel, nickel, titanium or platinum, can be employed in a foil, mesh or lath form, etc, as such a current collector but there are no particular restrictions to these. Further, as the method for effecting contact between the electrode and current collector, there is the method of directly press-bonding the mixture containing active material to the current collector and the method of applying a slurry containing the active material to the current collector, then drying off the solvent after which press-bonding is effected, etc, but the method employed is not particularly restricted. Furthermore, there is no particular restriction on the distance to the electrode surface from the current collector which corresponds to the electrode thickness, but the effects of the present invention are considerable where this is at least 20 µm.

In the electrode employed in the present invention, as well as the aforesaid carbon fibre active material it is necessary to add an electroconductive agent for enhancing the electron conductivity. By adding an electro-conductive agent, the resistance within the electrode is lowered so this is effective in raising the battery capacity. Materials of low electrical resistance, i.e. metals, semiconductors and semimetals are used as such an electroconductive agent but, in particular, a carbon material such as graphite or carbon black is preferably employed. The form of the electroconductive agent is not especially restricted, and it may be powder or fibre, etc, but in terms of size a fine material of 30 µm or less and preferably 10 µm or less is employed. The amount of electroconductive agent added in terms of the carbon active material is from 0.01 to 50 wt%, with from 0.1 to 20 wt% being further preferred.

Generally speaking, the carbon materials employed for electrodes have good electron conductivity, so there are few examples where an electroconductive agent is added. In aforesaid Japanese Unexamined Patent Publication No. 5-174820, an example is described in which there is used a mixture of low-graphitized carbonaceous material plus fine carbon particles and/or fine carbon fibre, but the carbon material of the active material here is very different from the present invention as stated above.

As the solvent component in the non-aqueous electrolyte solution used in the present invention, while not being particularly restricted there is used a mixture of high dielectric constant solvent and low viscosity solvent, or the like. As the high dielectric constant solvent, there are propylene carbonate, ethylene carbonate, butylene carbonate and other such cyclic carbonates, γ-butyrolactone and other such cyclic esters, tetramethylsulfolane, dimethylsulphoxide, N-methylpyrrolidone, dimethylformamide, and derivatives of these, etc, but there are no particular restrictions. As the low viscosity solvent, dimethoxyethane, ethoxymethoxyethane, diethoxyethane and other such straight chain ethers, tetrahydrofuran, dioxolane, dioxane and other such cyclic ethers, dimethyl carbonate, ethyl methyl carbonate, diethyl carbonate and other such straight chain carbonates, or derivatives of these, may be used, but there are no particular restrictions. The compositional ratio of these high dielectric constant and low viscosity solvents is also not especially restricted, but it is especially preferred that the ratio p, of electro-conductivity and viscosity, of the electrolyte solution lies in the range 3 ≤ p.

There may also be added components other than the aforesaid solvents to the solvent for the non-aqueous electrolyte solution employed in the present invention.

There are no particular restrictions on the electrolyte contained in the non-aqueous electrolyte solution employed in the present invention and examples include LiClO₄, LiBF₄, LiPF₆, LiCF₃SO₃, LiAsF₆, LiSCN, LiI and LiAlO₄. In particular, LiClO₄, LiBF₄ and LiPF6 are desirably employed.

The aforementioned conductivity and viscosity in respect of the non-aqueous electrolyte solution employed in the present invention are the values measured using a commercial conductivity meter and rotational viscometer. Measurements are carried out at 20°C.

In the present invention, the electrode in which carbon fibre constitutes the active material is, in particular, preferably employed as the negative electrode. In such circumstances, there are no particular restrictions on the positive electrode and there can be employed a generally-used electrode; for example, a moulded body comprising a mixture which includes active material powder and binding agent is preferably used. As said active material, while there are no particular restrictions, examples are lithium cobalt oxide, lithium nickel oxide, lithium manganese oxide, lithium niobium oxide, lithium vanadium oxide and other such transition metal oxides, molybdenum sulphide, titanium sulphide and other such transition metal chalcogenides, or mixtures thereof, or mecaptothiazole or other such disulphide compounds, polyalkylene oxides and polyalkylene sulphides, polyaniline, polythiophene, polypyrrole and other such heteropolymers, polyacetylene, polydiacetylene, poly-p-phenylene, polyphenylene vinylene and other such conjugated polymer compounds. Thus, materials which can occlude and release lithium ions or anions can be used as the positive electrode active material without restriction, but the oxidation potential thereof is preferably at least 2.5 V in terms of lithium. The particle diameter of the positive electrode active material powder is preferably from 0.1 to 100 µm, and more preferably 1 to 50 µm.

In the aforesaid positive electrode, in order to raise the mouldability, it is preferred that there be added a binding agent to the active material and electro-conductive agent. The same kind of compounds can be employed as for the negative electrode and the usage form thereof, is also not especially restricted. In the positive electrode, it is preferred that a current collector be employed for electrical connection to the terminal. It is possible to employ metals such as aluminium, nickel, titanium or platinum, etc, in foil, mesh or lath form, etc, as this current collector, but there are no particular restrictions thereto. Furthermore, having regard to the method for effecting contact between the positive electrode and the current collector, there are again no particular restrictions and there may be used the method of directly press-bonding the powder mixture containing positive electrode active material to the current collector or the method of applying a slurry containing positive electrode active material to the current collector, then drying off the solvent, after which press-bonding is effected, etc. Moreover, there is no particular restriction on the distance to the positive electrode surface from the current collector which corresponds to the positive electrode thickness, but the effects of the present invention are considerable where this is at least 20 µm.

Utilizing its features of lightness and also high energy density at high capacity, the secondary battery of the present invention can be widely employed in portable, small-size, electronic equipment such as video cameras, personal computers, word processors, radio cassette players and mobile phones, etc.

### Examples

Below, the present invention is explained in still more specific terms by providing examples. However, the invention is not to be restricted to these examples.

### Example 1

### (1) Preparation of the negative electrode

As the negative electrode carbon material there was used a powder-form material comprising PAN-based carbon fibre of average fibre diameter 7 µm (T300 made by Toray) cut to an average length of 30 µm. This carbon fibre plus carbon black (acetylene black) and polyvinylidene fluoride powder were mixed together at a weight ratio of 80 : 15 : 5, and then N-methylpyrrolidone added to produce a slurry. This slurry was applied onto copper foil, dried and pressed.

### (2) Preparation of the positive electrode

Commercial lithium carbonate (Li₂Co₃) and basic cobalt carbonate (2CoCO₃.3Co(OH)₂) were weighed out to give a mole ratio of Li/Co = 1/1 and, after mixing with a ball mill, heat treatment was carried out for 20 hours at 900°C and LiCoO₂ obtained. Following grinding, and using artificial graphite as an electroconductive agent and PVDF as a binder, these were mixed together at a weight ratio of LiCoO₂/artificial graphite/PVDF = 80/15/5, and then a slurry produced using N-methylpyrrolidone as a solvent. This slurry was coated onto an aluminium foil current collector and dried, followed by pressing, and a positive electrode moulded body obtained.

### (3) Preparation of the secondary battery

A coin-shaped battery was produced using, as the electrolyte solution, an electrolyte solution formed by dissolving 1 mol/litre of LiBF₄ in ethylene carbonate/dimethyl carbonate/γ-butyrolactone. The high output capacity ratio was 0.51 and lowering of capacity at high output was suppressed.

### (4) Evaluation

The secondary battery obtained in (3) above was subjected to charging at 4 mA current for 5 hours at constant potential to 4.1 V, and when then subjected to constant current discharge at 0.4 mA the discharge capacity in terms of the negative electrode was 380 mAh/g. Further, under the same charging conditions, and taking the discharge capacity in terms of the negative electrode when conducting 8 mA constant current discharge as the high output capacity, when the high output capacity/low output capacity was taken as the high output capacity ratio, this was found to be 0.80, so lowering of the capacity at a high output current was suppressed.

### Example 2, Comparative Example 1

### (1) Preparation of the negative electrode

By cutting carbon fibre of average diameter 7 µm (T300 made by Toray), five types of powder-form carbon fibre, of average length 20 µm, 30 µm, 48 µm, 70 µm and 130 µm (Comparative Example 1), were obtained. These five types of carbon material were respectively mixed with carbon black (acetylene black) and polyvinylidene fluoride powder at a weight ratio of 80 : 15 : 5, and N-methyl pyrrolidone added to produce slurries. Negative electrodes were then prepared in the same way as in Example 2, excepting that these slurries were employed.

### (2) Single electrode capacity evaluation of the negative electrode

Using, as the electrolyte solution, an electrolyte solution produced by dissolving 1 mol/litre of LiPF₆ in propylene carbonate/dimethyl carbonate (volume ratio 50/50), a triple-electrode type cell was prepared using metal Li foil as the counter and reference electrodes. For charging, constant potential charging was carried out at Li/Li+ 0V and at a current of 50 mA/g per weight of carbon material and, subsequently, discharging was carried out at constant current down to 1.5 V. Taking the capacity in the case of discharging at a current of 50 mA/g per weight of carbon material as the low output capacity, and the capacity in the case of discharging at a current of 600 mA/g per weight of carbon material as the high output capacity, when the high output capacity ratio/low output capacity ratio was taken as the high output capacity ratio, the capacities for each of the negative electrodes prepared in (1), having different average lengths, were as follows.
average length 20 µm; low output capacity 420 mAh/g, high output capacity ratio 86%
average length 30 µm; low output capacity 420 mAh/g, high output capacity ratio 86%
average length 48 µm; low output capacity 420 mAh/g, high output capacity ratio 86%
average length 70 µm; low output capacity 410 mAh/g, high output capacity ratio 86%
average length 130 µm; low output capacity 320 mAh/g, high output capacity ratio 68%

### (3) Battery evaluation

When batteries were prepared in the same way as in Example 1 and then evaluated in the same way, the capacity in terms of the negative electrode in the battery was as follows in each case.
average length 20 µm; low output capacity 390 mAh/g, high output capacity ratio 85%
average length 30 µm; low output capacity 380 mAh/g, high output capacity ratio 80%
average length 48 µm; low output capacity 380 mAh/g, high output capacity ratio 78%
average length 70 µm; low output capacity 375 mAh/g, high output capacity ratio 78%
average length 130 µm; low output capacity 300 mAh/g, high output capacity ratio 60%

### Example 3, Comparative Example 2

### (1) Preparation of the negative electrode

In the same way as in Example 2 excepting that copper foil of thickness 10 µm was used as the current collector and both faces thereof were coated with slurry, five types of negative electrode, in which the average length was 20 µm, 30 µm, 48 µm, 70 µm or 130 µm (Comparative Example 1) respectively and where the carbon material was coated onto both faces of the collector, were prepared. The electrode size was 56 mm x 500 mm and the coating thickness on a single side was about 90 µm.

### (2) Preparation of the positive electrode

Positive electrodes were prepared in the same way as in Example 2 excepting that aluminium foil of thickness 20 µm was used as the current collector and the slurry was applied to both faces thereof. The electrode size was 54 mm x 450 mm and the coating thickness on a single side was about 80 µm.

### (3) Preparation of coiled electrodes

The negative and positive electrodes prepared in (1) and (2) were coiled together in a spiral shape with a porous polypropylene film (Cellguard #2500, made by Daicel Chemical K.K.) interposed, and a cylindrically-shaped electrode obtained. When the extent of occurrence of short circuiting was investigated for the five types of negative electrode with different respective average lengths, the results were as follows.
average fibre length 20 µm, short circuiting occurrence factor 3%; average fibre length 30 µm, short circuiting occurrence factor 3%; average fibre length 48 µm, short circuiting occurrence factor 5%; average fibre length 70 µm, short circuiting occurrence factor 15%; average fibre length 130 µm, short circuiting occurrence factor 65%.

### Comparative Example 3

When a battery was prepared in the same way as in Example 1, excepting that no electroconductive agent was employed in the negative electrode, and evaluation carried out in the same way, the capacity in terms of the negative electrode was 280 mAh/g.

### Industrial Applicability

By means of the invention in this application, it is possible to offer a secondary battery of high charge and discharge capacity.

## Claims

1. A secondary battery which is characterized in that there is employed an electrode containing carbon fibre of average length less than 100 µm and an electroconductive agent.

2. A secondary battery according to Claim 1 characterized in that the average length of the carbon fibre is no more than 80 µm.

3. A secondary battery according to Claim 1 characterized in that the average length of the carbon fibre is no more than 50 µm.

4. A secondary battery according to Claim 1 characterized in that, taking the coating thickness of the electrode as A and the average length of the carbon fibre as B, the average length of the carbon fibre is B ≤ A.

5. A secondary battery according to Claim 1 characterized in that, taking the coating thickness of the electrode as A and the average length of the carbon fibre as B, the average length of the powder-form carbon material is 1.5B ≤ A.

6. A secondary battery according to Claim 1 characterized in that, taking the coating thickness of the electrode as A and the average length of the carbon fibre as B, the average length of the powder-form carbon material is 2B ≤ A.

7. A secondary battery according to Claim 1 characterized in that the carbon fibre is of the polyacrylonitrile type.

8. A secondary battery according to Claim 1 characterized in that the fibre diameter of the carbon fibre is from 2 to 50 µm.

9. A secondary battery according to Claim 1 characterized in that the fibre diameter of the carbon fibre is from 3 to 20 µm.

10. A secondary battery according to Claim 1 characterized in that the fibre length to the fibre diameter of the carbon fibre exceeds 1.

11. A secondary battery according to Claim 1 characterized in that the fibre length to the fibre diameter of the carbon fibre exceeds 2.

12. A secondary battery according to Claim 1 characterized in that the amount of the electroconductive agent added is from 0.01 to 50 wt% in terms of the carbon fibre.

13. A secondary battery according to Claim 1 characterized in that the amount of the electroconductive agent added is from 0.1 to 20 wt% in terms of the carbon fibre.
